# EUROPEAN PATENT SPECIFICATION

(11) **EP 2 189 292 B1**
(45) Date of publication and mention of the grant of the patent: **08.06.2011**
(21) Application number: 08169538.9
(22) Date of filing: 20.11.2008
(51) Int. Cl.: B41J 19/14

(54) **Multi-pass dot matrix print method and apparatus with improved swath layering order**
Multi-Pass-Punktmatrixdruckverfahren und Vorrichtung mit verbesserter Streifenschichtungsreihenfolge
Procédé d'impression par matrice de points à passages multiples et appareil avec un ordre de mise en couche amélioré

(43) Date of publication of application: 26.05.2010
(73) Proprietor: Mutoh Belgium NV, 8400 Oostende (BE)
(72) Inventor: Defever, Serge, B-8460, OUDENBURG (BE); Schaum, Martin, B-8670, OOSTDUINKERKE (BE); Vierstraete, Bruno, B-8470, SNAASKERKE (BE)
(74) Representative: pronovem

(56) References cited:
- US-A- 5 500 661

## Description

### Field of the invention

The present invention is related to methods and apparatuses for bidirectional multi-pass dot matrix printing, in particular bidirectional multi-pass ink jet printing. Methods and apparatuses of the invention reduce banding phenomena such as gloss variations.

### State of the art

On a traditional dot matrix printer, a family of printers to which an ink jet printer belongs, an image is recorded (formed) on a printable medium by printing a series of complementary rectangularly shaped stripes (also called bands or swaths). The dot matrix printer therefore comprises a print head for recording ink dots on the medium. The print head is preferably arranged on a scanning carriage. Ink dots are typically recorded by firing ink droplets from nozzles provided on the print head. The nozzles are arranged in one or more arrays. The arrays have a length which is typically much smaller than the dimension of the print medium.

A swath is therefore recorded by a single translation of the print head relative to the medium in a predetermined direction, typically transverse to the arrayed disposition of the nozzles. The recording of a swath is referred to as a fast or main scan or a pass. The direction of the fast scan is referred to as the fast scan direction or the direction of a pass of the print head. Ink fired repetitively from one nozzle during a pass, appears on the printable medium along a line. This line is called a raster or pixel line, which also refers to a row of the dot matrix.

The present invention deals with printing methods and apparatuses wherein different recorded swaths overlap at least partially. The latter case is referred to as multi-pass printing. Swath overlap can be used for increasing resolution, ink quantity, or for reducing a number of known banding phenomena. For increasing resolution of the printed image, in the overlap portion of a swath, raster lines in between existing raster lines can be printed. This is referred to as interlace printing.

In order to save printing time and to increase printing speed, it is known to configure print heads in multi-pass printing to print bidirectionally. In that case, fast scans are alternatingly carried out in one sense and in a reversed sense of the fast scan direction. For recording each successive swath, the sense of the fast scan direction is reversed.

Due to the printing in multiple passes, it has been observed that the ability of the substrate to take up ink on a certain location varies in relation to the amount of ink that has already been recorded on the given location. Hence, the ink changes the properties of the substrate's surface, and same swaths recorded in different passes can appear differently on a same medium.

Furthermore, in bidirectional multi-pass printing, the properties of a recorded swath can vary in function of the sense of the fast scan direction. When successive swaths are recorded bidirectionally, these swaths can appear differently. This can lead to colour banding and/or to gloss variations. The colour banding is mainly caused by a landing order of the ink colourants which is dependent of the sense of the fast scan.

Gloss variations, also referred to as gloss banding are artefacts that can appear in bidirectional printing. Apparently, the sense of the fast scan direction, and hence the direction in which ink drops are fired from the print head influences the gloss of the eventual recorded ink dot.

Gloss banding is particularly an issue in UV (ultra violet) ink jet printing. In UV ink jet print methods and apparatuses, typically, the recorded ink is cured by actinic (or UV) radiation after each swath has been recorded. A UV light source is therefore typically incorporated in the print head carriage. The UV light source scans the swath together with the print head. As a consequence, ink drops deposited on the medium are left very little time to spread over the medium before curing. The shape (profile) of ink drops can present a skewness, which is dependent on the sense of relative movement of the print head with reference to the medium during a fast scan (dependent on the sense of the fast scan direction). As the deposited drops are almost instantly cured, the skewed profile is "frozen". In case of bidirectional printing, this can give rise to gloss banding, as the reflection of light is influenced by the shape of the ink drops.

Gloss banding is however also observed in print outs from conventional ink jet printers.

All the above phenomena can create a number of banding artefacts in bidirectional multi-pass printing.

Patent US 5500661 discloses an ink jet printing method, wherein an area recordable in a single fast scan is thinned out according to complementary thinning patterns and the thinned out patterns are recorded in a plurality of fast scans. A sub scan is performed in a direction opposite to the normal sub scan direction at a predetermined period. A drawback of that patent is that the tone colour is not uniform, but varies according to a checkerboard pattern.

### Summary of the invention

The present invention aims to provide a method of multi-pass dot matrix printing which at least partially overcomes the drawbacks of prior art methods. It is an aim of the invention to provide at least an alternative method of dot matrix printing.

Methods of dot matrix printing of the invention aim to reduce bidirectional banding artefacts compared to methods of the prior art.

Methods of dot matrix printing of the invention aim to reduce banding artefacts at the swath borders compared to methods of the prior art.

The present invention also aims to provide apparatuses for dot matrix printing which do not suffer from drawbacks of prior art apparatuses, particularly bidirectional banding artefacts and/or banding artefacts at the swath borders. It is an aim of the invention to provide at least an alternative apparatus for dot matrix printing.

The present invention also aims to overcome at least partially the banding phenomena as identified above without (substantial) loss of printing speed.

The present invention aims to reduce gloss banding in bidirectional UV ink jet printing. The present invention aims to reduce gloss banding in bidirectional ink jet printing with varnish finish.

Aspects of the present invention relate to methods of and to apparatuses for dot matrix printing and in particular ink jet printing as set out in the appended claims. Methods and apparatuses according to the present invention meet aims of the invention and in particular overcome drawbacks of the prior art.

According to a first aspect of the invention, there is provided a method of multi-pass dot matrix printing, wherein a print head records print data on a medium in swaths. The term multi-pass refers to a plurality of swaths being superposed, such as in a partial overlapping fashion.

Swaths are recorded by scanning the print head relative over the medium along a fast scan direction bidirectionally (i.e. in the two senses thereof) and by feeding the medium relative to the print head along a feed direction transverse to the fast scan direction, in between successive fast scans. Swaths are recorded in both senses of the fast scan. A single swath is recorded in each pass. A pass refers to a single fast scan wherein a swath is recorded.

According to the present aspect, the method comprises the step of predetermining a chronological order of recording the swaths and a sequence of medium feeds for obtaining the chronological order of recording the swaths, the sequence comprising medium feeds in a forward sense of the feed direction and medium feeds in the reverse sense thereof. The chronological order of recording and the sequence of medium feeds are so selected that recorded swaths form a superposition of layers of swaths, each layer formed of a juxtaposition of at least portions of swaths and that for at least one layer of said superposition, the swaths (at least a portion of which) forming said at least one layer are recorded by fast scans of the print head running in a same fast scan sense.

Medium feed distances in the reverse sense are preferably at least 10 pixels, more preferably at least 20 pixels, most preferably at least 50 pixels.

Preferably said one layer of said superposition is formed of a juxtaposition of complete swaths, hence of swaths which form part of said one layer only. More preferably, the uppermost layer of said superposition is formed of a juxtaposition of swaths.

In methods of the invention, the ink density distribution within each swath is preferably configured to be uniform in the fast scan direction (except possibly for border regions). Methods of the invention preferably do not comprise printing by complementary large patterns, such as checkerboard patterns, etc. However, interlacing methods and other similar techniques may be used. Preferably, for a superposition of n layers, each area of 2n by 2n pixels on the medium comprises dots recorded in at least two different swaths.

Preferably, said one layer is a colour layer formed of swaths comprising a plurality of colours (ink colourants). The superposition is preferably so formed that said one layer is the uppermost colour layer in the superposition.

Preferably, methods comprise the step of recording swaths comprising (or consisting of) varnish, wherein the chronological order of recording and the sequence of medium feeds are further such that the swaths comprising varnish form a top layer in the superposition of layers. More preferably, such methods comprise the step of forming the top layer so that it consists of a juxtaposition of swaths comprising (or consisting of) a varnish which are recorded by fast scans of the print head running in a same fast scan sense.

Preferably, methods comprise the step of recording swaths having a uniform colour, preferably a white, for use as background colour. The chronological order of recording and the sequence of medium feeds are preferably so selected that the swaths having a uniform colour form a base layer (bottommost layer) in the superposition of layers, the base layer being the first layer on top of the medium.

Preferably, methods comprise the step of curing ink by UV (or actinic) radiation upon it is recorded in a swath.

Preferably, the sequence of medium feeds is so predetermined that medium feeds in the forward sense and medium feeds in the backward sense are alternated.

Preferably, the sequence of medium feeds is so predetermined that in between following medium feeds in the forward sense at least two successive medium feeds in the reverse sense are interposed.

Preferably, methods comprise the step of recording the swaths in at least one layer of the superposition of layers by using a weaving method.

According to a second aspect of the invention, there is provided an apparatus for dot matrix printing, comprising a print head (a scanning carriage) for recording swaths of ink in multi-pass on a medium by scanning the print head relative over the medium along a fast scan direction, the print head configured for recording swaths bidirectionally, and further comprising means for feeding the medium relative to the print head in a feed direction transverse to the fast scan direction, both in a forward sense and in the reverse sense thereof and means for carrying out the steps of one or more methods according to the present invention.

Preferably, the apparatus comprises means for UV curing recorded ink.

Preferably, the print head (the scanning carriage) comprises nozzles configured for recording a varnish and/or nozzles configured for recording a uniform colour ink as background colour.

Preferably, the apparatus comprises nozzles configured for recording inks of a plurality of colours. The nozzles for said inks of a plurality of colours and the nozzles for recording the varnish and/or the background colour are preferably juxtaposed in the direction of the fast scan.

### Brief description of the drawings

Figure 1 represents a print method according to the prior art. Figure 1A represents schematically (with the fast scan direction oriented perpendicular to the plane of the figure) different recording positions of a print head 10 relative to a medium 19. Corresponding swaths are thereby recorded as represented in figure 1B. Figure 1B represents the superposition of swaths on the medium 19 resulting from the recording positions of figure 1A. Figure 1B represents a cross sectional view of the medium and the swaths, with the fast scan direction oriented perpendicular to the plane of the figure.

Figure 2 represents the order of recording swaths according to a first preferred embodiment of the invention, applied to a four-pass print method (four swaths are superposed). Figure 2 shows a cross sectional view of a print medium and the superposition of the swaths.

Figure 3 represents schematically a chronological sequence of positions of a print head 30 on a medium in order to arrive at the swath recording order as in figure 2. The orientation is indicated by the arrows, wherein arrow 33 represents the fast scan direction and arrow 34 the medium feed direction relative to the print head.

Figure 4 represents an order of recording swaths for a four-pass print method according to another embodiment. The swath layers are represented in cross sectional view.

Figure 5 represents an order of recording swaths for a four-pass print method according to still another embodiment. The swath layers are represented in cross sectional view.

Figures 6 A to C represent three different embodiments of swath recording order for a three-pass print method. The swath layers are represented in cross sectional view.

Figure 7 represents an order of recording swaths for a four-pass print method according to still another embodiment. The swath layers are represented in cross sectional view.

Figure 8 represents an order of recording swaths for a four-pass print method with weaving (the ink density distribution in a swath is decreased towards the swath borders).

Figure 9 represents an improved method of feeding in order to reduce positioning inaccuracies due to play and/or backlash. A printing apparatus is represented by a print head 91 and feed rolls 92. The print head records a swath 93 on a print medium 90.

Figure 10 represents a print head suitable for printing apparatuses of the invention.

### Detailed description of the invention

Embodiments of the present invention are described in what follows, wherein a print head carries out fast scans over a print medium and the medium is repeatedly fed to the printing apparatus (i.e. scanning carriage print heads). However, the invention is not limited to such printing apparatuses, but can be applied as well to those types of apparatuses, wherein the print head carries out both fast scans and feed movements. However, the former types of apparatuses are preferred for carrying out aspects of the invention.

The term print head as used in describing the present invention refers to a scanning carriage for printing / recording. The two terms are used interchangeably in the present description.

In methods of dot matrix printing of the invention, print data is recorded on a medium in swaths of which the longitudinal orientation is arranged along (or parallel with) the direction of the fast scan.

The term scanning a pixel location refers to the fact that during the scanning said pixel location is configured to be addressed by the print head. Hence, each time a pixel location is scanned by the print head, that pixel location is configured to receive ink. Whether the pixel location actually receives ink during said scan depends on the print data.

In describing the present invention, the expression scanning a same pixel location in different passes refers to that print data relating to a same pixel is configured to be recorded in different passes.

The medium feed direction is oriented transverse to the fast scan direction. The feed direction is preferably oriented (substantially) perpendicular to the fast scan direction. More preferably, the absolute angle between the feed direction and the fast scan direction falls in the range between 70° and 110°, most preferably between 80° and 100°. The feed direction is preferably parallel to the arrayed disposition of the nozzles in the print head.

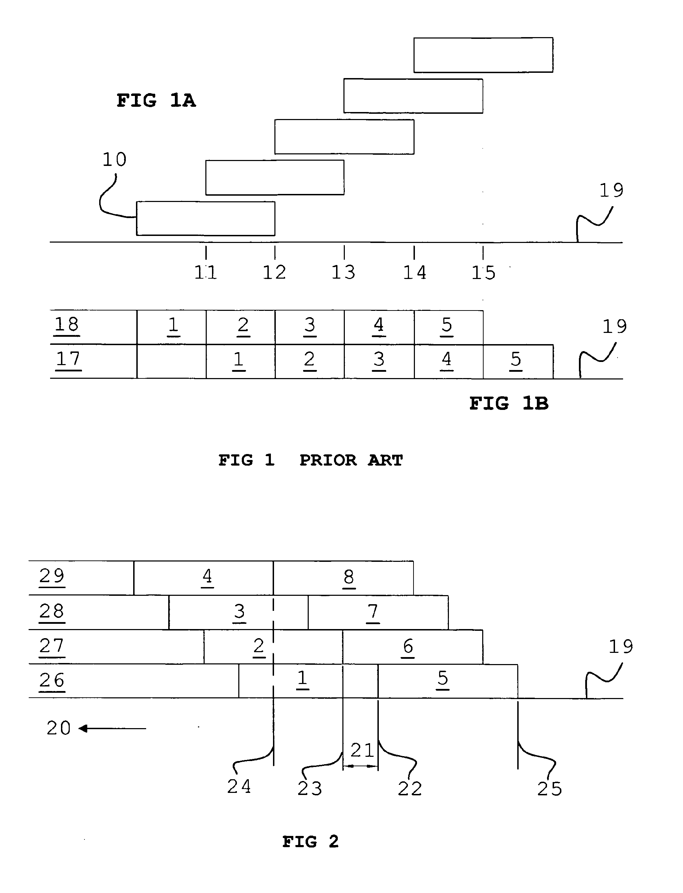

Figure 1 represents a sequence of recording swaths on a medium 19 according to conventional multi-pass ink jet printing. In between the recording of successive swaths by successive fast scans at corresponding positions 11 to 15 of a print head 10, a (forward) medium feed is carried out (fig. 1A), causing successive swaths 1 to 5 to be recorded at corresponding shifted positions 11 to 15 on the medium 19. The corresponding landing order of the ink is represented in figure 1B. It is clear from figure 1B, that the recording sequence of figure 1A results in the recording of two superposed layers 17, 18 on the medium. At any location on the print, the bottom layer 17 and top layer 18 are formed by different swaths. Also, half of each swath lands in the bottom layer 17 and the other half lands in the top layer 18.

The layer in the superposition to which a swath, or a portion of swath belongs, at a considered location on the medium, is determined by the chronological order of recording at the considered location. The swath that is recorded firstly at the location, makes part of the bottommost layer (17 in fig. 1B). The swath recorded successively at the considered location makes part of the second layer (18 in fig. 1B). The considered location refers to a macroscopic location, such as an area of at least four by four pixels.

In case the swaths of figure 1 are recorded bidirectionally, the swaths indicated by even numbers (2, 4) are all recorded during a same sense of the fast scan. The same applies to the swaths indicated by odd numbers (1, 3, 5), which are recorded during the reverse sense of the fast scan. It can then be deduced from figure 1B that both of the layers 17 and 18 in the superposition comprise portions that are recorded in one sense of the fast scan direction and portions that are recorded in the reverse sense. This can lead to banding artefacts as indicated above, not only because the top layer comprises portions recorded bidirectionally, but possibly also because the bottom layer comprises same.

Referring still to figure 1, it can be noted that the chronological order of recording the swaths corresponds to the order of placement (or occurrence) of the swaths on the print medium (along the medium feed direction).

According to the invention, the above drawbacks can be obviated by selecting, in a bidirectional multi-pass print method, a chronological order of recording the swaths which is different from the eventual order of occurrence of the swaths on the medium. The chronological order of recording should ensure that at least one layer of the superposition of layers formed by the swaths in multi-pass printing only consists of swaths (or portions of swaths) that are recorded in a same sense of the fast scan direction. Hence, the swaths forming said at least one layer are actually recorded unidirectionally, while the print method remains bidirectional. In order to be able to do this, medium feeds have to be performed both in a forward sense and in a backward (reverse) sense. The chronological order of recording the swaths can then be obtained by applying a correct sequence of forward and backward medium feeds. The print data recorded in each swath is print data corresponding to the area on the medium on which said swath is recorded.

The forward sense refers to an advance feed direction as would be considered in printing methods with medium feeds in one sense only (the sense wherein the medium is increasingly covered by the print).

According to an aspect of the invention, the direction in which the medium is fed is hence alternated between the "normal", or forward feed direction and a backward or reverse feed direction. As a result, the chronological order of recording the swaths does not coincide with the order of occurrence of the swaths on the medium (along the medium feed direction). An alternation pattern for the feed, and hence a chronological order of recording the swaths can be so selected as to obtain characteristics that will be identified.

Figure 2 represents a first embodiment. The number indicating each swath (represented by the rectangles) corresponds to the chronological order of recording the swath. Hence, swath 2 is recorded following swath 1, etc. The order of occurrence on the medium is as depicted in figure 2, wherein arrow 20 indicates the direction of forward feed of the medium relative to the print head. Swath 1 is recorded directly on the medium 19 by a fast scan running in a first sense of the fast scan direction. Thereafter, a backward feed over a distance 21 is performed from a position 22 back to a position 23 of the medium relative to the print head and swath 2 is recorded at the latter position. Swath 2 is recorded by a fast scan running in a second sense of the fast scan direction, being the reverse of the first sense. Thereafter, a backward feed over about a same distance 21 is performed and a swath 3 is recorded by a fast scan running in the first sense (hence, the print head is printing bidirectionally). The same applies for recording a swath 4 on top of swath 3. Swath 4 is recorded by a fast scan running in the second sense.

Following the recording of swath 4, a forward feed is applied over a distance from the position 24 corresponding to swath 4 to a position 25 ahead of the swath 1. Thereafter, a swath 5 is recorded directly on the medium 19 by a fast scan running in the first sense of the fast scan direction. Position 25 is selected such that the swaths 1 and 5 are juxtaposed, as can be seen from figure 2. Thereafter, swaths 6, 7 and 8 are recorded in the same way as respectively swaths 2, 3 and 4.

It is to be noted that the swaths indicated with odd numbers are all recorded by fast scans running in the first sense. The swaths indicated with even numbers are all recorded by fast scans running in the second sense.

As a result, the swaths in each couple of swaths 1 and 5, 2 and 6, 3 and 7, 4 and 8 are arranged juxtaposed on the medium 19. Hence, each couple of swaths as indicated form a layer on top of the medium 19, each of these layers being superposed. Hence, a first layer 26 formed by swaths 1 and 5 is arranged directly on the medium 19. A second layer 27 formed by swaths 2 and 6 is arranged on top of the first layer 26. A third layer 28 formed by swaths 3 and 7 is arranged on top of the second layer 27 and a fourth layer 29 formed by swaths 4 and 8 is arranged on top of the third layer 28. The fourth layer 29 forms the top layer in the present embodiment. As four swaths are superposed for forming the image (and hence for recording all the print data) at every location, it is hence clear that the printing method of the present embodiment is a four-pass print method.

It is also clear from the above, that the chronological order of recording the swaths and the sequence of medium feeds causes the fast scans for recording the swaths belonging to a same layer to run in a same sense of the fast scan direction. Hence, in the first layer 26, swaths 1 and 5 are both recorded by fast scans running in the first sense. In the second layer 27, swaths 2 and 6 are both recorded by fast scans running in the second sense, etc.

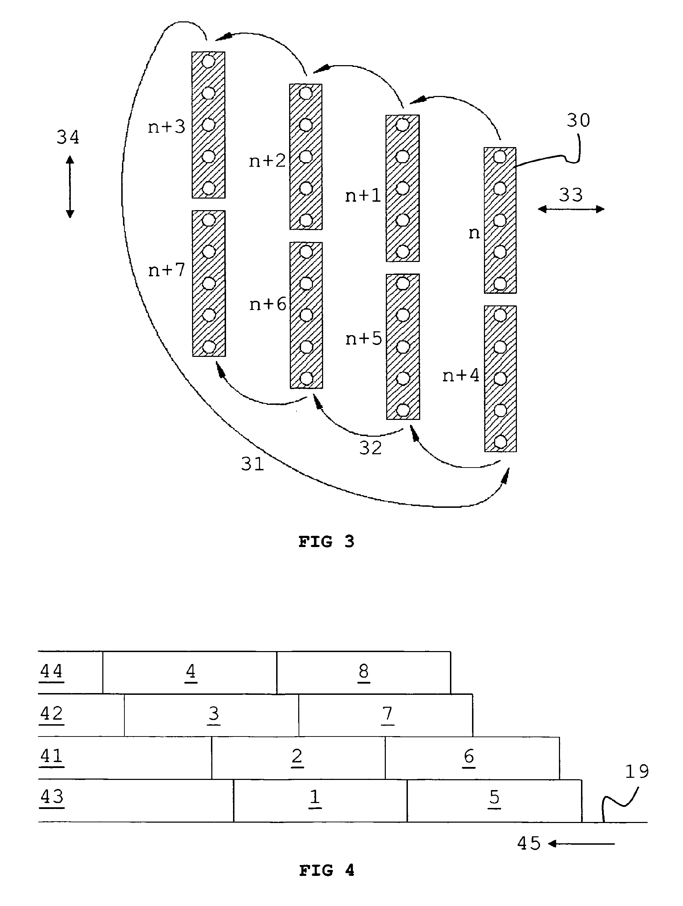

The sequence of medium feeds relative to the print head used in the present embodiment is represented in figure 3. Figure 3 represents schematically the positions of a print head 30 on the medium. The medium is represented by the sheet of the figure. Arrows 33 and 34 represent the directions of respectively the fast scan and the medium feed. At the position n of the print head 30, the swath 1 of figure 2 is recorded. At the position n+1 of the print head, the swath 2 is recorded, etc. The sequence of medium feeds that can be applied for obtaining the print method of figure 2 hence consists of a larger forward feed 31, followed by three smaller backward feeds 32.

It is to be noted that the number of open circles in the graphical representation of the print head 30 in figure 3 is not to be interpreted as a measure of the number of nozzles of the print head.

In methods of the invention, such as in the present embodiment, the forward feed step does not need to be a multiple of the breadth of the swaths. The three backward feed steps 32 do not need to be equal.

When the (backward) feed step is too small, printing is performed with same nozzles in a same area multiple times. This can lead to the occurrence of closely located artefacts, such as from misfiring nozzles. However, in order to avoid or at least reduce banding artefacts at the borders of the swaths, the backward feed step should be at least 10 pixels. Preferably, the backward feed step is selected to be at least 20 pixels, more preferably at least 50 pixels and most preferably at least 100 pixels. Similar constraints are preferably applied to the forward feed step as well.

Referring back to figure 2, it can be noticed that a swath is only recorded after the underlying layer(s) has (have) been completed (i.e. recorded in full) over the area defined by said swath. This enables to obtain an ordered superposition as depicted, wherein each swath belongs to (or forms part of) one layer only in the superposition, conversely to the prior art printing method of figure 1, wherein each swath is half recorded directly on the medium and the other half is recorded on top of a preceding swath.

The effect of the print method of the present embodiment is that a layer of swaths can be superposed on a substrate (the medium or a layer underneath) having more uniform properties throughout the layer, such as colour tone, roughness (ink dot shape), etc. Hence, the appearance of the final image can be more uniform and can comprise less printing artefacts, such as banding.

Figure 4 illustrates another embodiment of printing methods according to the invention, wherein a print method is applied for recording ink colourants in two passes (colour layers 41, 42) with additionally the printing of a white background layer 43 and a varnish top layer 44, hence totally a four-pass method. In figure 4, the chronological order of recording swaths is indicated by the number identifying each swath. Hence, swath 1 is recorded prior to swath 2, etc. The order of appearance on the medium 19 is as represented in figure 4, wherein arrow 45 indicates the sense of the forward feed of the medium relative to the print head.

As can be deduced from figure 4, the chronological order of recording the swaths and the corresponding medium feed sequence is so selected as to allow the formation of superposed layers of swaths 41-44, wherein each swath forms part of a single layer only. The layers in the superposition are hence independent of each other (there are no swaths which lie in multiple layers).

The chronological order of recording is also so selected that the swaths of each layer are recorded in a same sense of the fast scan. This can be seen in figure 4, wherein swaths identified by even and odd numbers are recorded in respective same senses of the fast scan. Each layer comprises (or consists of) swaths identified by only even numbers or only odd numbers.

In the embodiment of figure 4, the bottom layer 43 is a background layer of a uniform colour, such as of a white colour when the medium 19 is e.g. of a dark colour or transparent.

On the background layer 43, a colour image is recorded in a two-pass fashion, leading to the recording of the swaths in layers 41 and 42. Finally, a top layer 44 consisting of a varnish is recorded. The varnish layer 44 and/or the background layer 43 can be optional.

The medium feed sequence for obtaining the order of recording as in figure 4 is similar to that of the previous embodiment (figs. 2 and 3). However, the three consecutive backward feeds interposed between two forward feeds do not have equal feed step. The feed step between the recording of swaths in the colour layers 41 and 42 preferably amounts to about half of the breadth of a swath. This can be beneficial for displacing the borders of the swaths as far away from each other as possible, hence reducing banding at the swath borders. However, the backward feed step between a swath of the background layer 42 and a swath of the colour layer 41 and between a swath of the colour layer 42 and a swath of the varnish layer 44 can be smaller, even smaller than 10 pixels.

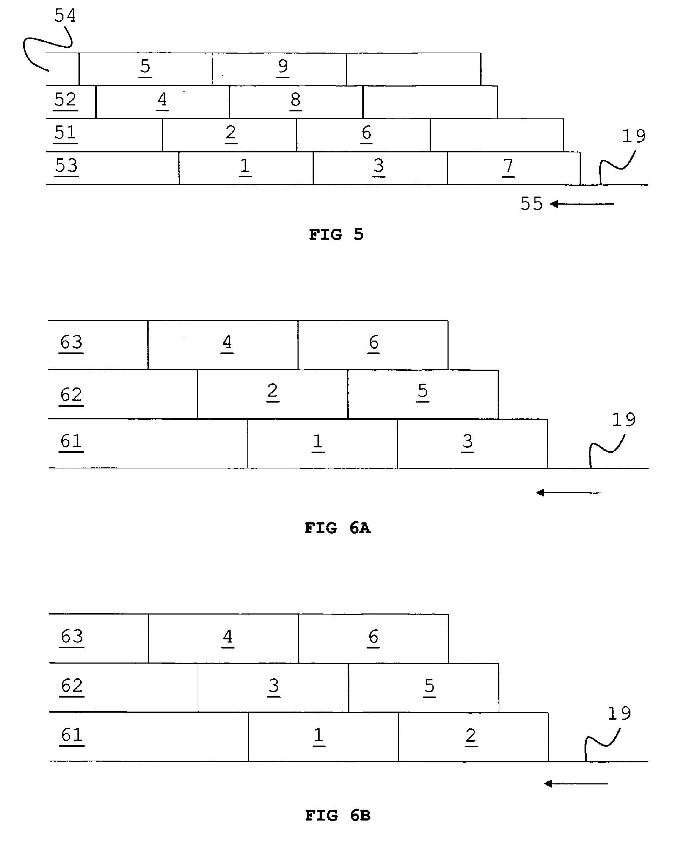

It can be noticed from figure 4, that the swaths in the colour layers 41 and 42 are respectively recorded by fast scans running in reversed (opposite) senses (even numbers for the swaths of the lower colour layer 41 and odd numbers for the swaths of the upper colour layer 42). Conversely, figure 5 illustrates an embodiment leading to a same print structure as in figure 4, i.e. background/two colour layers/varnish, but wherein swaths in both colour layers 51 and 52 are recorded in a same sense of the fast scan. Therefore, the chronological order of recording the swaths and the corresponding medium feed sequence are modified, as is represented by the numbers identifying the swaths as they are chronologically recorded.

The medium feed sequence can readily be deduced from figure 5, wherein the arrow 55 indicates the forward feed sense of the medium 19 relative to the print head. The medium feed sequence is as follows. A first backward feed (from the position corresponding to swath 1 to the position corresponding to swath 2) is followed by a forward feed (to the position corresponding to swath 3). Thereafter, two successive backward feeds are carried out (firstly to the position corresponding to swath 4, secondly to the position corresponding to swath 5), followed finally by a forward feed (to the position corresponding to swath 7).

The effect of the present chronological order of recording and of the medium feed sequence is that all the swaths of both the colour layers 51 and 52 are recorded in a same fast scan sense. In addition, all the swaths of the background colour layer 53 are recorded in a same fast scan sense. All the swaths of the varnish layer 54 are recorded in a same fast scan sense as well. As printing is performed bidirectionally, all swaths identified by even numbers are recorded in a same sense of the fast scan direction. Same applies to the swaths identified by odd numbers, which are all recorded in a same sense (reverse of the sense for the even swaths).

Embodiments have been presented up to now wherein in each layer the swaths are recorded in a same sense. Such need not be so, and the invention contemplates methods wherein the swaths are recorded in a same sense in at least one layer. Depending on the specified print quality, the medium and/or the printing speed, printing methods, wherein one or more layers are sacrificed can be applied.

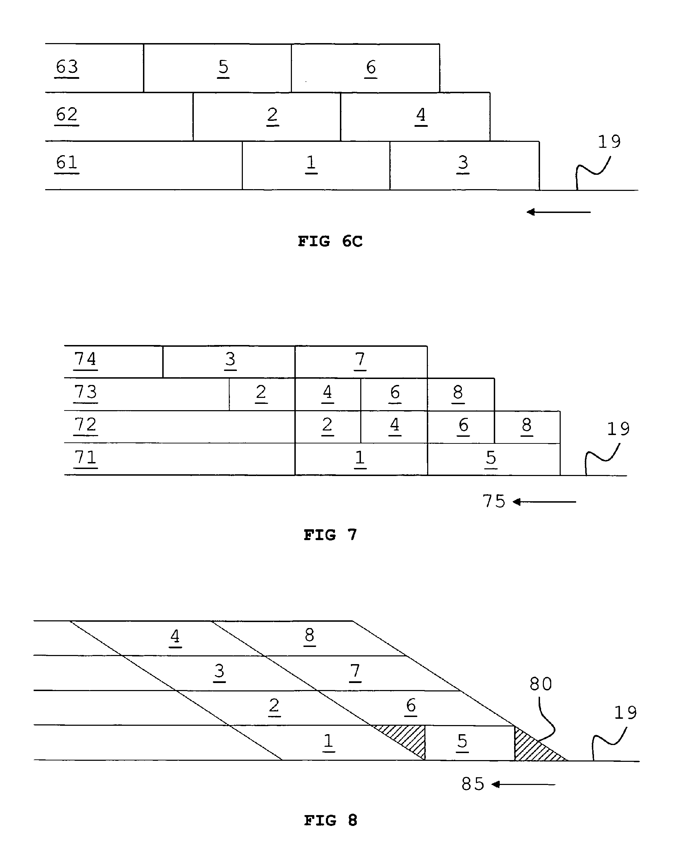

In multi-pass print methods with odd number of passes, at least one layer has to be selected to be inconsistent as regards the recording sense of the swaths of which said one layer is composed. This is illustrated in figure 6 for three-pass methods. Same conventions apply to figure 6 as for the previous figures. In figure 6A, the middle layer 62 is inconsistent, as it is composed of swaths that are recorded bidirectionally. In figure 6B, the bottom layer 61 is inconsistent, as it is composed of swaths that are recorded bidirectionally. In figure 6C, the top layer 63 is inconsistent for a same reason.

The method represented in figure 6B can be used for example for printing a background layer 61 of a uniform colour and two colour layers 62 and 63 on top in two passes. The background layer 61 will then be the inconsistent layer.

The method represented in figure 6C can be used for example for printing an image in two passes (colour layers 61 and 62) and finishing the image with a varnish layer 63 on top. The varnish layer 63 can be selected to be the inconsistent layer.

Another embodiment is illustrated in figure 7, for a four-pass print method forming four layers of superposition in the print, but wherein two layers are interdependent, i.e. comprise same swaths. The conventions as used for the previous figures apply. By way of example, the bottom layer 71 can be a background colour layer, the middle layers 72 and 73 can be colour layers for forming the image and the top layer 74 can be a varnish layer.

The chronological order of recording and the corresponding medium feed sequence can be selected such that, even though the two middle colour layers 72 and 73 are interdependent, all swaths which compose said two colour layers are recorded in a same sense. This can be noticed in figure 7, as all those swaths bear even numbers.

The medium feed sequence can readily be deduced from figure 7, wherein the arrow 75 indicates the forward feed sense of the medium 19 relative to the print head. The medium feed sequence is as follows. A first backward feed (from the position corresponding to swath 1 to the position corresponding to swath 2) is followed by a second backward feed (to the position corresponding to swath 3). Thereafter, a forward feed is carried out (to the position corresponding to swath 4, about same position as for swath 1), followed by an additional forward feed (to the position corresponding to swath 5) and so on.

The varnish (or top) layer 74 is composed of swaths recorded in a same fast scan sense. The background (or bottom) layer 71 is composed of swaths recorded in a same fast scan sense as well.

The above embodiments, wherein a varnish and/or a background can be used, can be applied as well without the varnish and/or the background layer, which can be replaced by colour layers (four-pass).

Alternatively, embodiments can be analogous to the embodiments represented by figures 4 and 5, but without recording the varnish and/or the background layer. They then would relate to two-pass methods (only the middle colour layers are considered). The chronological order of recording remains unchanged for the remaining swaths, with the difference that the medium feed sequence is adapted to cancel the swaths of the varnish and background layers. For figure 4, this would mean that swath 2 would chronologically be the first swath recorded, followed by swath 3, swath 6 and swath 7. The layering and consistency of the sense of recording the swaths within each layer remain unchanged.

Initialisation and/or termination steps can be applied on methods of the invention, in which the order of recording the swaths can be different. A wait time before recording one or more swaths and / or a unidirectional print method can be used.

Methods of the invention can be combined with known weaving (also referred to as stitching) methods, such as the ones disclosed in WO 2008/040712. The term weaving refers to decreasing the ink density of a swath towards the borders. The extents of a swath are then defined by the area including and delimited by the weaving zone. An embodiment of a four-pass method with weaving is illustrated in figure 8. In such cases and for the recording of the independent layers formed of a juxtaposition of complete swaths which do not form part of other layers, the backward feed step should be at least equal to the breadth of the weaving zone 80 of the downstream side of the swath (i.e. at the side towards the forward feed direction of the medium relative to the print head, indicated by arrow 85. In cases wherein a number of layers are recorded as in the prior art (hence built up of portions of swaths), the above restriction does not apply to the recording of swaths forming part of the latter layers.

In multi-pass printing methods, the print data is split into the multiple passes. In each pass a complementary portion of the print data for a specified location is recorded. Such portions can be obtained through the application of known print masks. Preferably, in printing methods of the invention, the amount of ink is about equally divided over the multiple passes for each given location. Preferably, each pass is configured for recording a predetermined amount of ink.

At each location, the ink that is recorded is preferably configured to be distributed as uniformly as possible over all swaths that are superposed. Preferably, for cases wherein n layers (swaths) are superposed, such as with an n-pass print method, an area having a size of 2n by 2n pixels is considered. Each such area on the recorded print medium should comprise ink dots originating from at least two passes, more preferably ink dots originating from all n passes. Each swath is hence preferably not formed out of visually perceivable structures, such as checkerboard patterns.

Preferably, the print data is divided over the multiple passes according to dithering methods.

Printing methods according to the invention can be particularly useful in UV ink jet printing, because they allow to obtain prints with a more uniform gloss. Therefore, preferably the swaths of the topmost layer are printed in a same sense of the fast scan direction, but most preferably the chronological order of recording the swaths is such that superposition layers are formed, wherein the swaths of each layer are printed in a same sense of the fast scan direction.

Methods of the invention can also improve the quality of print outs with diffuse reflection, as the average dot behaviour is dependent on the print (fast scan) direction.

In case of thermally drying of the ink, the chronological order of recording the swaths can be so selected (determined) that a new swath is recorded on underlying swaths that have had sufficient dry time, so as to avoid bleeding effects. This is particularly beneficial in cases wherein a varnish layer is recorded on top of the print, for avoiding bleeding effects between ink and varnish. This can be obtained by appropriately selecting the chronological order of recording the swaths and the corresponding medium feed sequence.

Printing methods of the invention allow to record layers of swaths in a same fast scan sense while printing bidirectionally, hence saving printing time and keeping up printing speed, which makes such methods economically feasible.

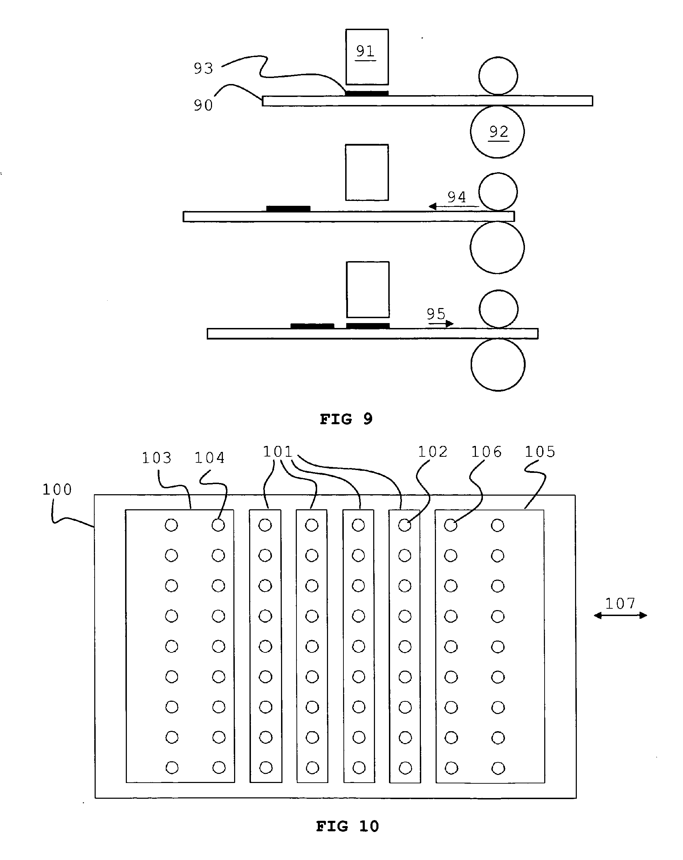

As methods of the invention provide both forward and backward feeds, the positioning accuracy of the print medium with reference to the print head (or the printing apparatus) can be enhanced by performing the medium feeds in one sense (either the forward feeds, or the reverse feeds, or possibly both) in two steps, as illustrated in figure 9. First, a feed 94 in the one sense is carried out over a larger distance (over-feed) than the target distance. Next, a feed 95 in the reversed sense is carried out to position the medium relative to the print head at target location. The two-step feed arrangement allows to minimize the influence of backlash or play on print medium positioning accuracy.

According to a second aspect, the invention provides apparatuses for dot matrix printing. Apparatuses comprise means for carrying out methods of the invention. In particular, apparatuses comprise a print head or other means for recording swaths of ink on a medium.

Figure 10 represents a particular print head (i.e. scanning carriage) 100, seen from below. The print head 100 can comprise cartridges 101 arranged for storing different ink colourants. A set of nozzles 102 is coupled to or embedded into each cartridge. The nozzles are arranged to fire ink drops on the medium. Besides the cartridges for the ink colourants, can the print head 100 comprise a cartridge 103 arranged for storing a varnish composition, the cartridge coupled to dedicated nozzles 104. In addition, or alternatively, the print head 100 can comprise a cartridge 105 and corresponding nozzles 106 arranged for respectively storing and firing an ink to be used as a background colour, such as a white. The print head 100 is preferably so arranged that the nozzles 102 for the different inks and possibly the nozzles 104 for the varnish composition are arranged juxtaposed in the direction of the fast scan indicated by arrow 107.

Print methods of the invention obviate the need of arranging the nozzles 104 for the varnish and/or the nozzles 106 for the background colour ahead of or at the rear of the nozzles 102 for the other ink colourants as seen in the feed direction, leading to more simple print head configurations.

Recorded swaths are oriented longitudinally along a fast scan direction (i.e. direction of translation of the print head / carriage). Apparatuses further comprise means for feeding the medium in a forward and a reverse feed direction with reference to the print head. The forward and reverse feed directions are parallel to each other and different from the fast scan direction. Said means for feeding the medium can comprise feeding means as are known in the art, such as a belt, a roll, either or not coated with grit.

In specific cases can apparatuses according to the invention comprise means for UV curing recorded ink. Said means are preferably provided on the scanning carriage of the print head and are preferably configured for curing recorded ink during each recording fast scan.

Preferably, apparatuses according to the invention comprise a print head configured for recording a varnish composition and/or a base (background) layer, either in conjunction with, or without said means for UV curing. The varnish layer can be a UV curable composition and hence can be used in UV ink jet printing methods.

Methods and apparatuses for dot matrix printing of the invention allow a reduction of bidirectional banding defects.

## Claims

1. A method of multi-pass dot matrix printing, wherein a print head records print data on a medium (19) in swaths by scanning the print head relative over the medium along a fast scan direction bidirectionally, a single swath being recorded in each pass, and by feeding the medium relative to the print head along a feed direction transverse to the fast scan direction in between successive fast scans, the method comprising the step of predetermining a chronological order of recording the swaths and a sequence of medium feeds for obtaining the chronological order of recording the swaths, the sequence comprising medium feeds in a forward sense of the feed direction and medium feeds in the reverse sense thereof, wherein medium feed distances in the reverse sense are at least 10 pixels,
wherein the chronological order of recording and the sequence of medium feeds are such that:
- recorded swaths form a superposition of layers (26-29) of swaths, each layer formed of a juxtaposition of at least portions of swaths, and
- the swaths of at least one layer of said superposition are recorded by fast scans of the print head running in a same fast scan sense.

2. The method according to claim 1, wherein said one layer of said superposition is formed of a juxtaposition of complete swaths.

3. The method according to claim 1 or 2, wherein for a superposition of n layers, each area of 2n by 2n pixels on the medium comprises dots recorded in at least two different swaths.

4. The method according to any one of the preceding claims, wherein medium feed distances in the reverse sense are at least 20 pixels, preferably at least 50 pixels.

5. The method according to any one of the preceding claims, wherein said one layer is a colour layer formed of swaths comprising a plurality of colours and wherein the superposition is so formed that said one layer is the uppermost colour layer in the superposition.

6. The method according to any one of the preceding claims, comprising the step of recording swaths comprising varnish, wherein the chronological order of recording and the sequence of medium feeds are further such that the swaths comprising varnish form a top layer in the superposition of layers.

7. The method of claim 6, comprising the step of forming the top layer so that it consists of a juxtaposition of swaths comprising a varnish which are recorded by fast scans of the print head running in a same fast scan sense.

8. The method according to any one of the preceding claims, comprising the step of recording swaths having a uniform colour, preferably a white, for use as background colour, wherein the chronological order of recording and the sequence of medium feeds are further such that the swaths having a uniform colour form a base layer in the superposition of layers, the base layer being the first layer on top of the medium.

9. The method according to any one of the preceding claims, comprising the step of curing ink upon it is recorded in a swath by UV radiation.

10. The method according to any one of the preceding claims, wherein the sequence of medium feeds is so predetermined that in between following medium feeds in the forward sense at least two successive medium feeds in the reverse sense are interposed.

11. The method according to any one of the preceding claims, comprising the step of recording the swaths in at least one layer of the superposition of layers by using a weaving method.

12. An apparatus for dot matrix printing comprising:
- a print head for recording swaths of ink in multi-pass on a medium by scanning the print head relative over the medium along a fast scan direction, the print head configured for recording swaths bidirectionally,
- means for feeding the medium relative to the print head in a feed direction transverse to the fast scan direction, both in a forward sense and in the reverse sense thereof and
- means for carrying out the steps of the method according to any one of the preceding claims.

13. The apparatus according to claim 12, comprising means for UV curing recorded ink.

14. The apparatus according to claim 12 or 13, wherein the print head comprises nozzles configured for recording a varnish and/or nozzles configured for recording a uniform colour ink as background colour.

15. The apparatus according to claim 14, comprising nozzles configured for recording inks of a plurality of colours, wherein the nozzles for the inks of a plurality of colours and the nozzles for recording the varnish and/or the background colour are juxtaposed in the direction of the fast scan.

## Patentansprüche

1. Multi-Pass-Punktmatrixdruckverfahren, wobei ein Druckkopf Druckdaten auf einem Medium (19) in Streifen aufzeichnet, indem der Druckkopf relativ über das Medium entlang einer schnellen Abtastrichtung bidirektional abtastet, wobei ein einzelner Streifen in jedem Durchlauf aufgezeichnet wird, und indem das Medium relativ zum Druckkopf entlang einer Zuführrichtung quer zur schnellen Abtastrichtung zwischen aufeinanderfolgenden schnellen Abtastungen zugeführt wird, wobei das Verfahren den Schritt des Vorabbestimmens einer chronologischen Reihenfolge des Aufzeichnens der Streifen und einer Abfolge der Mediumzufuhren zum Erhalten der chronologischen Reihenfolge des Aufzeichnens der Streifen umfasst, wobei die Abfolge die Mediumzufuhren in eine Vorwärtsrichtung der Zuführrichtung und die Mediumzufuhr in die umgekehrte Richtung davon umfasst, wobei die Distanzen der Mediumzufuhren in der umgekehrten Richtung zumindest 10 Pixel sind,
wobei die chronologische Reihenfolge des Aufzeichnens und die Abfolge der Mediumzufuhren derart sind, dass:
- aufgezeichnete Streifen eine Überlagerung von Schichten (26-29) von Streifen bilden, wobei jede Schicht aus einer Aneinanderreihung von zumindest Teilen von Streifen gebildet ist, und
- die Streifen von zumindest einer Schicht der Überlagerung durch schnelle Abtastungen des Druckkopfs in einer gleichen schnellen Abtastrichtung aufgezeichnet werden.

2. Verfahren nach Anspruch 1, wobei die eine Schicht der Überlagerung aus einer Aneinanderreihung von vollständigen Streifen gebildet wird.

3. Verfahren nach Anspruch 1 oder 2, wobei für eine Überlagerung von n Schichten jeder Bereich von 2n x 2n Pixel am Medium Punkte umfasst, die in zumindest zwei unterschiedlichen Streifen aufgezeichnet werden.

4. Verfahren nach einem der vorherigen Ansprüche, wobei die Distanzen der Mediumzufuhren in der umgekehrten Richtung zumindest 20 Pixel, vorzugsweise zumindest 50 Pixel, sind.

5. Verfahren nach einem der vorherigen Ansprüche, wobei die eine Schicht eine Farbschicht ist, die aus Streifen gebildet ist, umfassend eine Mehrzahl von Farben, und wobei die Überlagerung derart gebildet ist, dass die eine Schicht die oberste Farbschicht in der Überlagerung ist.

6. Verfahren nach einem der vorherigen Ansprüche, umfassend den Schritt des Aufzeichnens von Streifen, die Lack umfassen, wobei die chronologische Reihenfolge des Aufzeichnens und die Abfolge der Mediumzufuhren ferner derart sind, dass die Streifen, die Lack umfassen, eine oberste Schicht in der Überlagerung von Schichten bilden.

7. Verfahren nach Anspruch 6, umfassend den Schritt des Bildens der obersten Schicht, so dass es aus einer Aneinanderreihung von Streifen, die einen Lack umfassen und durch schnelle Abtastungen des Druckkopfs in einer gleichen schnellen Abtastrichtung aufgezeichnet werden, besteht.

8. Verfahren nach einem der vorherigen Ansprüche, umfassend den Schritt des Aufzeichnens von Streifen mit einer einheitlichen Farbe, vorzugsweise weiß, zur Verwendung als Hintergrundfarbe, wobei die chronologische Reihenfolge des Aufzeichnens und die Abfolge der Mediumzufuhren ferner derart sind, dass die Streifen mit einer einheitlichen Farbe eine Basisschicht in der Überlagerung von Schichten bilden, wobei die Basisschicht die erste Schicht auf dem Medium ist.

9. Verfahren nach einem der vorherigen Ansprüche, umfassend den Schritt des Trocknens der Tinte mittels UV-Strahlung, nachdem sie in einem Streifen aufgezeichnet wurde.

10. Verfahren nach einem der vorherigen Ansprüche, wobei die Abfolge der Mediumzufuhren derart vorab bestimmt ist, dass zwischen folgenden Mediumzufuhren in der Vorwärtsrichtung zumindest zwei aufeinanderfolgende Mediumzufuhren in der umgekehrten Richtung zwischengelagert sind.

11. Verfahren nach einem der vorherigen Ansprüche, umfassend den Schritt des Aufzeichnens der Streifen in zumindest einer Schicht der Überlagerung von Schichten durch ein Webverfahren.

12. Vorrichtung zum Punktmatrixdrucken, umfassend:
- einen Druckkopf zum Aufzeichnen von Streifen aus Tinte in Multi-Pass auf einem Medium, indem der Druckkopf relativ über das Medium entlang einer schnellen Abtastrichtung abtastet, wobei der Druckkopf konfiguriert ist, um Streifen bidirektional aufzuzeichnen,
- Mittel zum Zuführen des Mediums relativ zum Druckkopf in einer Zuführrichtung quer zur schnellen Abtastrichtung, sowohl in einer Vorwärtsrichtung als auch in der umgekehrten Richtung davon, und
- Mittel zum Ausführen der Schritte des Verfahrens nach einem der vorherigen Ansprüche.

13. Vorrichtung nach Anspruch 12, umfassend Mittel zum UV-Härten von aufgezeichneter Tinte.

14. Vorrichtung nach Anspruch 12 oder 13, wobei der Druckkopf Düsen, die konfiguriert sind, um einen Lack aufzuzeichnen, und/oder Düsen, die konfiguriert sind, um eine einheitliche Farbtinte als Hintergrundfarbe aufzuzeichnen, umfasst.

15. Vorrichtung nach Anspruch 14, umfassend Düsen, die konfiguriert sind, um Tinten einer Mehrzahl von Farben aufzuzeichnen, wobei die Düsen für die Tinten einer Mehrzahl von Farben und die Düsen zum Aufzeichnen des Lacks und/oder der Hintergrundfarbe in einer Aneinanderreihung in der Richtung der schnellen Abtastung vorliegen.

## Revendications

1. Procédé d'impression par matrice de points à passages multiples, dans lequel une tête d'impression enregistre des données d'impression sur un support (19) par bandes en balayant la tête d'impression par rapport au support le long d'u n e direction de balayage rapide de manière bidirectionnelle, une seule bande étant enregistrée à chaque passage, et en avançant le support par rapport à la tête d'impression le long d'une direction d'avance transversale à la direction de balayage rapide entre des balayages rapides successifs, le procédé comprenant l'étape de prédétermination d'un ordre chronologique d'enregistrement des bandes et d'une séquence d'avances de support pour obtenir l'ordre chronologique d'enregistrement des bandes, la séquence comprenant des avances de support dans un sens avant de la direction d'avance et des avances de support dans le sens inverse de celui-ci, dans lequel les distances d'avance de support dans le sens inverse sont d'au moins 10 pixels,
dans lequel l'ordre chronologique d'enregistrement et la séquence d'avances de support sont tels que :
- les bandes enregistrées forment une superposition de couches (26 à 29) de bandes, chaque couche étant constituée d'une juxtaposition d'au moins des parties de bandes, et
- les bandes d'au moins une couche de ladite superposition sont enregistrées par des balayages rapides de la tête d'impression s'effectuant dans un même sens de balayage rapide.

2. Procédé selon la revendication 1, dans lequel ladite une couche de ladite superposition est constituée d'une juxtaposition de bandes complètes.

3. Procédé selon la revendication 1 ou 2, dans lequel, pour une superposition de n couches, chaque zone de 2n x 2n pixels sur le support comprend des points enregistrés dans au moins deux bandes différentes.

4. Procédé selon l'une quelconque des revendications précédentes, dans lequel les distances d'avance de support dans le sens inverse sont d'au moins 20 pixels, de préférence d'au moins 50 pixels.

5. Procédé selon l'une quelconque des revendications précédentes, dans lequel ladite une couche est une couche de couleur constituée de bandes comprenant une pluralité de couleurs, et dans lequel la superposition est formée de sorte que ladite une couche soit la couche de couleur la plus haute dans la superposition.

6. Procédé selon l'une quelconque des revendications précédentes, comprenant l'étape d'enregistrement de bandes comprenant un vernis, dans lequel l'ordre chronologique d'enregistrement et la séquence d'avances de support sont en outre tels que les bandes comprenant un vernis forment une couche supérieure dans la superposition de couches.

7. Procédé selon la revendication 6, comprenant l'étape de formation de la couche supérieure de sorte qu'elle consiste en une juxtaposition de bandes comprenant un vernis qui sont enregistrées par des balayages rapides de la tête d'impression s'effectuant dans un même sens de balayage rapide.

8. Procédé selon l'une quelconque des revendications précédentes, comprenant l'étape d'enregistrement de bandes ayant une couleur uniforme, de préférence blanche, pour une utilisation en tant que couleur d'arrière-plan, dans lequel l'ordre chronologique d'enregistrement et la séquence d'avances de support sont en outre tels que les bandes ayant une couleur uniforme forment une couche de base dans la superposition de couches, la couche de base étant la première couche sur le support.

9. Procédé selon l'une quelconque des revendications précédentes, comprenant l'étape de durcissement par un rayonnement UV de l'encre lorsqu'elle est enregistrée en une bande.

10. Procédé selon l'une quelconque des revendications précédentes, dans lequel la séquence d'avances de support est prédéterminée de sorte qu'entre des avances de support suivantes dans le sens avant, au moins deux avances de support successives dans le sens inverse soient interposées.

11. Procédé selon l'une quelconque des revendications précédentes, comprenant l'étape d'enregistrement des bandes dans au moins une couche de la superposition de couches en utilisant un procédé d'entrecroisement.

12. Appareil pour une impression par matrice de points comprenant :
- une tête d'impression pour enregistrer des bandes d'encre en de multiples passages sur un support en balayant la tête d'impression par rapport au support le long d'une direction de balayage rapide, la tête d'impression étant configurée pour enregistrer des bandes de manière bidirectionnelle ;
- des moyens pour avancer le support par rapport à la tête d'impression dans une direction d'avance transversale à la direction de balayage rapide, à la fois dans un sens avant et dans le sens inverse de celui-ci, et
- des moyens pour effectuer les étapes du procédé selon l'une quelconque des revendications précédentes.

13. Appareil selon la revendication 12, comprenant des moyens pour durcir par UV l'encre enregistrée.

14. Appareil selon la revendication 12 ou 13, dans lequel la tête d'impression comprend des buses configurées pour enregistrer un vernis et/ou des buses configurées pour enregistrer une encre de couleur uniforme en tant que couleur d'arrière-plan.

15. Appareil selon la revendication 14, comprenant des buses configurées pour enregistrer des encres d'une pluralité de couleurs, dans lequel les buses pour les encres d'une pluralité de couleurs et les buses pour enregistrer le vernis et/ou la couleur d'arrière-plan sont juxtaposées dans la direction du balayage rapide.
